## Europäisches Patentamt

## European Patent Office

## Office européen des brevets

(19)

(11) Veröffentlichungsnummer: **0 067 405**

**B1**

(12) # EUROPÄISCHE PATENTSCHRIFT

(45) Veröffentlichungstag der Patentschrift:
04.02.87

(51) Int. Cl.⁴: **G 02 B 7/18**

(21) Anmeldenummer: **82105021.8**

(22) Anmeldetag: **08.06.82**

(54) **Fassung für ein prismatisches, optisches Bauteil.**

(30) Priorität: **11.06.81 CH 3853/81**

(43) Veröffentlichungstag der Anmeldung:
**22.12.82 Patentblatt 82/51**

(45) Bekanntmachung des Hinweises auf die Patenterteilung:
**04.02.87 Patentblatt 87/6**

(84) Benannte Vertragsstaaten:
**AT DE FR GB IT SE**

(56) Entgegenhaltungen:
**DE-A-1 572 625**
**DE-A-2 022 561**
**DE-A-2 140 317**
**GB-A-651 732**
**JP-A-53 065 726**

(73) Patentinhaber: **WILD HEERBRUGG AG., CH- 9435 Heerbrugg (CH)**

(72) Erfinder: **Gees, Jürg, Frauenacker 9, CH- 9435 Heerbrugg (CH)**
Erfinder: **Mäder, Josef, Bahnhofstrasse 106, CH- 9445 Rebstein (CH)**
Erfinder: **Ziegler, Klaus, Sonnenbergstrasse 210, CH- 9435 Heerbrugg (CH)**
Erfinder: **Zünd, Peter, Stocker 10, CH- 9436 Balgach (CH)**

(74) Vertreter: **Punschke, Edgar Patentanwalt, Löwenstrasse 1, CH- 8001 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 067 405 B1

## Beschreibung

Die Erfindung bezieht sich auf die Fassung für ein prismatisches, optisches Bauteil, mit einem Träger zur Aufnahme des optischen Bauteils und Klemmitteln.

Bisher aus der Fachliteratur bekanntgewordene Fassungen dieser Art weisen eine zylindrische Form mit kreisförmigem oder viereckigem Querschnitt auf, in dessen Innerem ein Dove-Prisma derart gelagert ist, dass seine Reflexionsfläche im Bereich der Kanten auf abgestimmten Auflageflächen von Absätzen oder Einlageteilen des Zylinders liegt und gegenüber diesen, im optisch nicht genutzten Teil des Prismas, ein in dieses eingreifendes und von einer Druck-Schraube gehaltenes Segment das Prisma sichert.

- Bei einer anderen bekannten Fassung wird das Prisma im zylindrischen Träger von Justierschrauben getragen und mit Klebstoff gesichert.

In beiden Fällen erfordert die Justierung durch die Herstellung der abgestimmten Auflageflächen oder das Einstellen und Sichern der Justierschrauben enorm viel Arbeit und Geschicklichkeit. Auch sind die Kontrollarbeiten dazu sehr aufwendig. Ausserdem treten Verspannungen im optischen Bauteil in den optisch wirksamen Bereichen auf. Darüberhinaus ergeben sich durch die unterschiedlichen Temperaturausdehnungskoeffizienten des Fassungs- und Glasmaterials Temperaturspannungen, welche bei der festen Einspannung der optischen Bauteile nicht ausgleichbar sind. Dadurch leidet die Qualität der Instrumente.

Es ist daher ein Ziel der Erfindung, diese Nachteile zu vermeiden und eine Fassung zu schaffen, die eine verspannungsfreie, präzise Halterung zur Selbstausrichtung des optischen Bauteils in einem weiten Temperaturbereich sowie eine nacharbeitsfreie Montage gewährleistet.

Dieses Ziel lässt sich erreichen, wenn erfindungsgemäss der Träger wenigstens einen Zylinderflächenabschnitt zur entlang zweier Erzeugender anliegenden Aufnahme des optischen Bauteils aufweist und dass wenigstens ein an diesem angreifendes mit dem Träger verbindbares ein- oder mehrteiliges Klemmittel vorgesehen ist, das wenigstens ein elastisches Element zur Erzielung einer statisch bestimmten Lagerung mit zwei Einspann-Freiheitsgraden des optischen Bauteils enthält.

Ausserdem kann der Träger als Hohlzylinder zur Aufnahme eines prismatischen optischen Bauteils in seinem Innern mit Tangentialebenen in den Berührungserzeugenden, welche einen grösseren Öffnungswinkel als die Tangentialebenen der entsprechenden Berührungslinien des optischen Bauteils aufweisen, ausgebildet sein.

Vorteilhafterweise ist der Träger ein Kreiszylinder, wodurch sein um seine Achse drehbarer Einbau in ein optisches Gerät einfach möglich ist.

Auch kann das eine Klemmittel fest und das andere lösbar mit dem Träger verbunden sein, wobei das lösbare Klemmittel wenigstens ein elastisches Element aufweist und die Klemmittel durch ihre Zustellung das optische Bauteil an den Träger drücken.

Weitere Einzelheiten und Merkmale der erfindungsgemässen Fassung eines optischen Bauteiles ergeben sich aus der Beschreibung von Ausführungsbeispielen anhand der Zeichnung.

In dieser zeigt
Fig. 1 die Fassung eines Dove-Prismas in einem Kreiszylinder
Fig. 2 die Fassung nach Fig. 1 im Schnitt I-I
Fig. 3 die Fassung eines Umlenkprismas
Fig. 4 die Fassung der Fig. 3 im Schnitt III-III
Fig. 5 die Fassung eines anderen Umlenkprismas
Fig. 6 die Fassung der Fig. 5 im Schnitt V-V
Fig. 7 die Fassung eines Geradsichtprismas und
Fig. 8 die Fassung der Fig. 7 im Schnitt VII-VII.

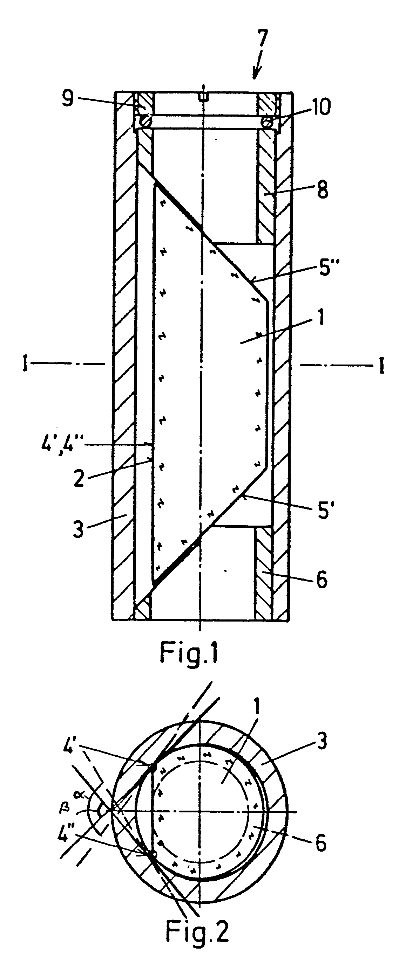

Die Fassung eines Dove-Prismas - 1 - (Fig. 1, 2), welches vorzugsweise wegen niedrigerer Herstellungskosten rundgeschliffen und auf der ebenen Reflexionsfläche - 2 - optisch poliert ist, weist, ebenfalls aus Gründen der einfacheren, somit billigeren, aber auch genaueren Herstellung, einen kreiszylindrischen, innen sehr formgenau geschliffenen Träger - 3 - auf. Bei erfolgtem Zusammenbau liegt das Dove-Prisma - 1 - entlang der durch die von der Reflexionsfläche - 2-mit dem Zylindermantel gebildeten Prismen-Kanten - 4', 4''-auf der Innenfläche des Trägers - 3 - auf. An der einen Stirnseite - 5' - liegt das Dove-Prisma - 1 - an einem Bereich eines fest mit dem Träger - 3 - verbundenen kreisringzylindrischen Klemmittels - 6 - an und an der anderen Stirnseite - 5'' - liegt ein mehrteiliges Klemmittel - 7 - mit einem Bereich seines kreisringförmigen Auflageelementes - 8-am Dove-Prisma - 1 - an. Dieses Auflageelement - 8 - wird von einem in den Träger - 3 - einschraubbaren Ring - 9 - mittels einem zwischen beiden liegenden O-Ring - 10 - elastisch gegen das Dove-Prisma - 1 - gepresst. Die Tangentialebenen des Hohlzylinders 3 in den Berührungspunkten 4', 4'' schließen einen Winkel $\alpha$ in Figur 2 ein, die jenigen des opt. Bauteils einen Winkel $\beta$.

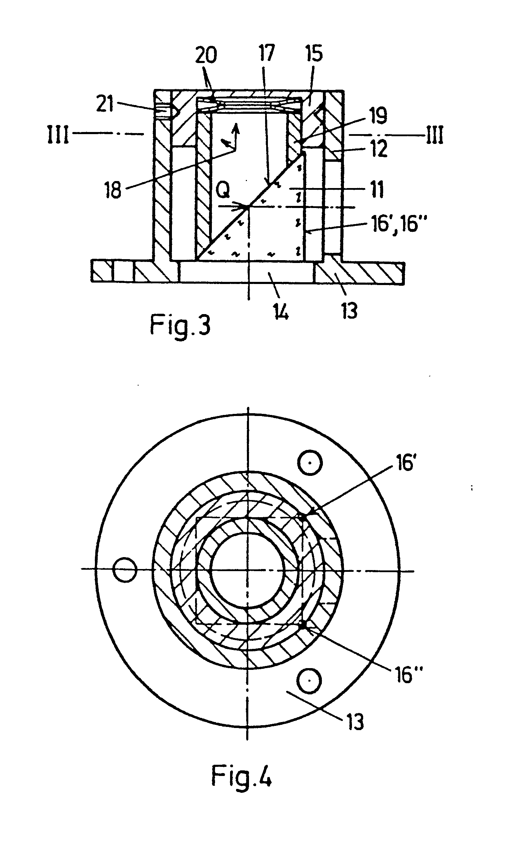

Eine Prismenfassung (Fig. 3, 4) für ein Umlenkprisma - 11-weist als Träger - 12 - einen Tubus auf, welcher an seiner einen Stirnseite einen Flansch - 13 - trägt. Dieser ist einerseits als Befestigungsflansch für die Prismenfassung und andererseits als ein mit dem Tubus fest verbundenes Klemmittel verwendet, indem der Innendurchmesser der Flanschöffnung - 14 - kleiner als die Diagonale der an ihm aufliegenden Fläche des Umlenkprismas - 11 - ist. Dadurch liegt das Prisma nur im Bereich seiner Ecken auf dem Flansch auf. Dieses Umlenkprisma - 11 - ist in einer in den Tubus eingesetzten kreisringzylindrischen Hülse - 15 - dadurch gelagert, dass es mit zwei der Kanten - 16', 16'' -, die durch die nicht auf dem Flansch aufliegenden Flächen senkrecht zu diesem bestimmt sind, auf der inneren Zylinderfläche aufliegen, wobei diese Hülse im Bereich der Strahlaustrittsfläche durchbrochen ist.

An der Reflexionsfläche - 17 - des Umlenkprismas - 11 - liegt eine kreisringzylindrische, abgeschrägte Stütze - 19 - eines zweiten, mehrteiligen Klemmittels - 18 - auf, welche durch zwei Tellerfedern - 20 -, die sich an der Hülse - 15 - abstützen, gegen das Umlenkprisma gedrückt wird. Die Hülse - 15 - ist durch eine in eine Nut eingreifende Wurmschraube - 21 - gesichert.

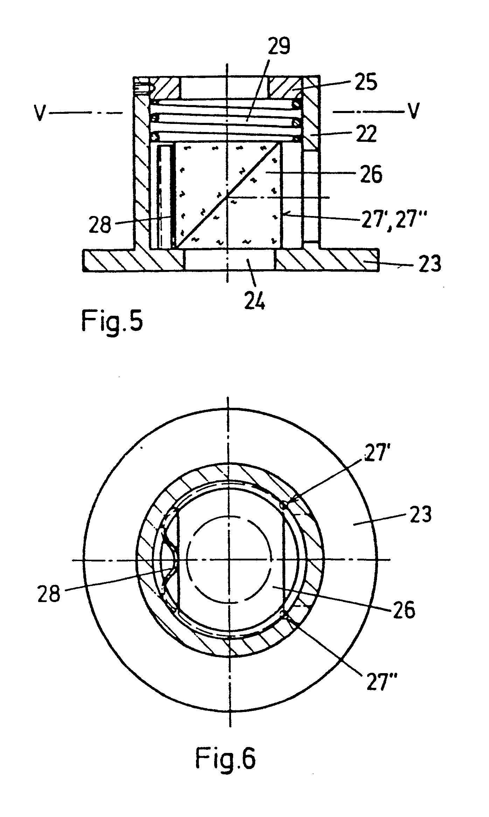

Eine Fassung für ein anderes Umlenkprisma (Fig. 5, 6) ist ähnlich wie die Fassung nach den Fig. 3 und 4 aufgebaut. In einem kreisringzylindrischen Träger - 22 -, welcher einen Flansch - 23 - mit einem kreisförmigen Durchbruch - 24 - aufweist, ist ein zweiteiliges Umlenkprisma - 26 - so eingesetzt, dass es einerseits mit der Strahleneintrittsfläche, die eine Diagonale grösser als der Durchmesser des Durchbruchs - 24 - aufweist, am Flansch - 23 - aufliegt und andererseits mit zwei Auflagekanten - 27', 27'' - der Strahlaustrittsfläche an der Hülseninnenwand anliegt. Dabei wird das zweiteilige Umlenkprisma an einer diesen Auflagekanten gegenüberliegenden Fläche mittels einer ersten Feder - 28 - an die Hülse gedrückt und an der der Strahleneintrittsfläche gegenüberliegenden Fläche von einer zweiten Feder - 29 -, die an den Eckenbereichen des Prismas aufliegt, gegen den Flansch - 23 - gehalten, wobei sich die zweite Feder auf einem lösbaren Haltering - 25 - abstützt.

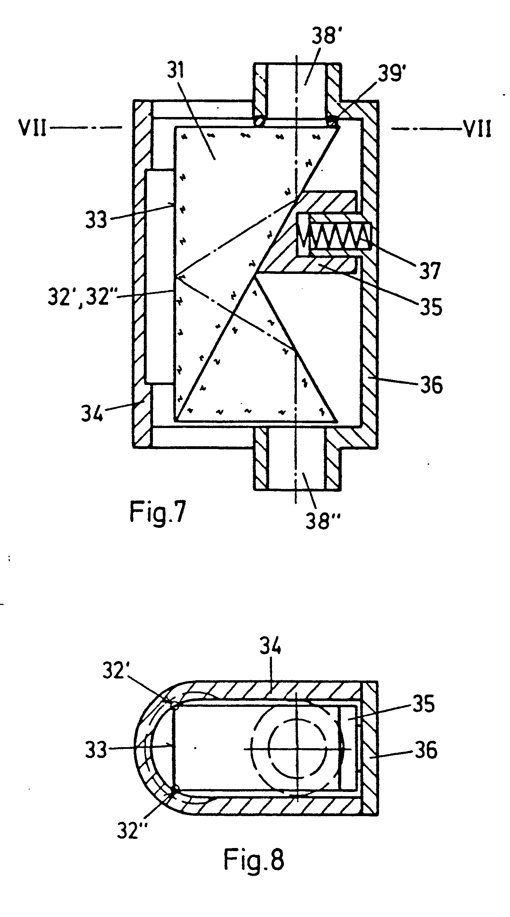

Bei einer Fassung für ein Geradsichtprisma - 31 - (Fig. 7, 8) liegt dieses mit zwei Auflage-Kanten - 32', 32'' - der Reflexionsfläche - 33 - in einem U-förmigen Träger - 34 - im Bereich der Krümmung auf und wird durch ein mehrteiliges Klemmittel, welches im wesentlichen als Deckel - 36 - ausgebildet ist, gehalten. Dieses weist einen zur Auflage am Geradsichtprisma - 31 - eingerichteten Stempel - 35 - auf, der auf einem Hohlzapfen des auf dem Träger sitzenden Deckels - 36 - verschiebbar sitzt und von einer Feder - 37 - gegen das Geradsichtprisma gedrückt wird. Gegenüber den Prismenstirnseiten befinden sich Öffnungen - 38', 38'' - im Deckel - 36 - für den Strahlendurchtritt. Benachbart zu diesen Öffnungen ist im Deckel auf einer Seite ein O-Ring - 39' - angeordnet, welcher am Prisma anliegt und dieses axial hält.

Bei diesen Prismenfassungen ist gemeinsam, dass das Prisma entlang zweier Auflagekanten an einem Träger anliegt und so gehalten ist, dass seine Lagerung statisch bestimmt und selbstausrichtend ist, d.h. dass zwei Einspannfreiheitsgrade vorhanden sind.

Diese Fassungsart ist nicht nur auf Prismen beschränkt. Sie kann für alle entsprechend geformten oder formbaren optischen Bauteile verwendet werden.

Sie ergibt eine in einem grossen Temperaturbereich einwandfreie Lagerung des optischen Bauteils, wobei ausserdem keine bei diesen Bauteilen sonst üblichen sehr zeitaufwendigen Justier- und Nacharbeiten erforderlich sind. Diese Justierarbeiten erforderten vielfache Montagen und Demontagen der Prismen um die Auflageflächen nachzuarbeiten. Durch nachfolgende Sicherung der Prismen in ihrer Lage mit Klebern entstanden Lagerungen, welche keinen Dehnungsausgleich bei Temperaturschwankungen zuliessen. Auch waren meist durch die Art der Lagerung und Fixierung Spannungen im optischen Bauteil nicht zu vermeiden, sodass bei zusätzlichen Beanspruchungen, wie Erschütterungen, die Bauteile zu Bruch gingen.

Auch die Vorrichtungen und Lehren für die Justier- und Nacharbeiten entfallen bei dieser Fassungsart. Darüberhinaus werden in vergleichbaren Fällen kleinere Fassungsabmessungen möglich und dennoch eine höhere Unempfindlichkeit gegen Schlag-und Vibrations- sowie Temperaturbeanspruchungen erreicht, wie Versuche belegten. Auch ist die optisch wirksame Fläche stets parallel zur mechanischen Fassungsachse, welche oft als Drehachse des Bauteils dient. Nach dem Einbau des optischen Bauteiles entfallen also alle Einstellarbeiten; die Genauigkeit wird durch die Einzelbearbeitung der Einzelteile erreicht und nicht wie bisher üblich durch Justier- und Nacharbeiten.

## Patentansprüche

1. Fassung für ein prismatisches, optisches Bauteil, mit einem Träger zur Aufnahme des optischen Bauteils und Klemmitteln, dadurch gekennzeichnet, dass der Träger (3, 12, 22, 34) wenigstens einen Zylinderflächenabschnitt zur entlang zweier Erzeugender anliegenden Aufnahme des optischen Bauteils (1, 11, 26, 31) aufweist und dass wenigstens ein an diesem angreifendes und mit dem Träger verbindbares ein- oder mehrteiliges Klemmmittel (7; 18; 28, 29, 25; 35, 37) vorgesehen ist, das zur Erzielung einer statisch bestimmten Lagerung mit zwei Einspann-Freiheitsgraden des optischen Bauteils enthält.

2. Fassung nach Anspruch 1, zur Aufnahme eines wenigstens im Bereich der Prismenkanten zylinderförmigen prismatischen optischen Bauteils, dadurch gekennzeichnet, dass der Träger als Hohlzylinder (3, 12, 22) zur Aufnahme eines prismatischen optischen Bauteils (1, 11, 26) in seinem Innern mit Tangentialebenen in den Berührungserzeugenden, welche einen grösseren Öffnungswinkel ($\alpha > \beta$) als die Tangentialebenen der entsprechenden Berührungslinien des optischen Bauteils aufweisen, ausgebildet ist.

3. Fassung nach Anspruch 2, dadurch gekennzeichnet, dass der Träger ein Kreiszylinder (3, 12, 22) ist und so Gerät erlaubt.

4. Fassung nach Anspruch 1, wobei mindestens zwei Klemmittel vorgesehen sind, dadurch gekennzeichnet, dass eines der Klemmittel (6, 23) fest und das andere (8) lösbar mit dem Träger verbunden ist, wobei das lösbare Klemmittel wenigstens ein elastisches Element (10) aufweist und die Klemmittel durch ihre Zustellung das optische Bauteil an den Träger drücken.

5. Fassung nach Anspruch 4, dadurch gekennzeichnet, dass das fest mit dem Träger verbundene Klemmittel als Teil des Trägers und einstückig mit diesem ausgebildet ist.

6. Fassung nach Anspruch 4, dadurch gekennzeichnet, dass das elastische Element als Tellerfeder (20), Spiralfeder (29), Wellfeder (28) oder O-Ring (10, 39) ausgebildet ist.

7. Fassung nach Anspruch 2, dadurch gekennzeichnet, dass der Träger ein Zylinder (34) mit U-förmigem Querschnitt und einem Deckel (36) ist, auf welchen das Klemmittel (35) aufgesetzt ist.

## Claims

1. A support for a prismatic, optical element with a device for holding the optical element and clamping devices; characterized by the holding device (3, 12, 22, 34) having at least one cylindrical surface section for supporting the optical element (1, 11, 26, 31) along two generatrices, and by there being at least one clamping device, comprising one or more pieces, (7; 18; 28, 29, 25; 35, 37) which bears upon the optical element and can be connected to the holding device, said clamping device having at least one elastic element (10, 20, 28, 29, 37) to give a statically determinate orientation with two degrees of freedom of clamping of the optical element.

2. A support as claimed in Claim 1 for holding a prismatic, optical element which is cylindrical in shape at least in the region of the prism edges; characterized by the holding device, which is a hollow cylinder (3, 12, 22) for accommodating a prismatic optical element (1, 11, 26), having in its interior tangential planes to the contract generatrices which have a greater included angle than the tangential planes to the corresponding lines of contact of the optical element (alpha > beta).

3. A support as claimed in Claim 2; characterized by the holding device being a circular cylinder (3, 12, 22) allowing it to be installed in an optical device in such a way that it can rotate about its own axis.

4. A support as claimed in Claim 1 having at least two clamping devices; characterized by one of the clamping devices (6, 23) being permanently fixed and the other (8) detachably connected to the holding device, the detachable clamping device having at least one elastic element (10), and the two clamping devices coming together to press the optical element against the holding device.

5. A support as claimed in Claim 4; characterized by the clamping device which is fixed to the holding device being a part of this device and of a piece with it.

6. A support as claimed in Claim 4; characterized by the elastic element being either a disk spring (20), a helical spring (29), a corrugated spring (28) or an O-ring (10, 39').

7. A support as claimed in Claim 2; characterized by the holding device being a cylinder (34) with a U-shaped cross-section and a cover (36) on which the clamping device (35) is mounted.

## Revendications

1. Support pour un élément optique prismatique, avec une pièce d'appui recevant l'élément optique et les organes de serrage, caractérisé par le fait que la pièce d'appui (3, 12, 22, 34) présente au moins un découpage sur la surface cylindrique pour recevoir l'élément optique (1, 11, 26, 31) le long de deux génératrices et qu'au moins un des organes de serrage en une ou plusieurs parties (7; 18; 28, 29, 25; 35, 37) tenant l'élément optique et pouvant être assemblé avec l'élément d'appui soit prévu avec au moins un élément élastique (10, 20, 28, 29, 37) pour assurer un appui statiquement déterminé avec deux degrés de liberté pour le serrage de l'élément optique.

2. Support selon la demande 1, pour recevoir un élément optique prismatique, de forme cylindrique au moins ans le voisinage des arêtes du prisme, caractérisé par le fait que l'élément d'appui est un cylindre creux (3, 12, 22) pour la réception d'un élément optique prismatique (1, 11, 26) en son intérieur, avec des plans tangentiels dans les génératrices de contact, qui présentent un plus grand angle d'ouverture ($\alpha > \beta$) que les plans tangentiel des lignes de contact correspondantes de l'élément optique.

3. Support selon la demande 2, caractérisée par le fait que l'élément d'appui est un cylindre circulaire (3, 12, 22) et qu'il permet ainsi un montage pouvant tourner autour de son axe dans un appareil optique.

4. Support selon la demande 1, où au moins deux organes de serrage sont prévus, caractérisé par le fait que l'un des organes de serrage (6, 23) est fixe et que l'autre (8) peut être démonté de l'élément d'appui, l'organe de serrage démontable présentant au moins un élément élastique (10), et les organes de serrage pressant ensemble l'élément optique contre l'élément d'appui.

5. Support selon la demande 4, caractérisé par le fait que l'organe de serrage relié fixement à l'élément d'appui fait partie intégrante de l'élément d'appui et ne forme qu'une seule pièce avec celui-ci.

6. Support selon la demande 4, caractérisé par le fait que l'élément élastique est une rondelle Belleville (20), un ressort hélicoïdal (29), une rondelle ressort (28) ou un joint torique (10, 39').

7. Support selon la demande 2, caractérisé par le fait que l'élément d'appui est un cylindre (34) de section en forme de U et avec un couvercle (36) sur lequel l'organe de serrage (35) est appliqué.

Fig.1

Fig.2

Fig.3

Fig.4

3

Fig.5

Fig.6

Fig.7

Fig.8